# EUROPÄISCHE PATENTANMELDUNG

(11) **EP 2 394 883 A1**
(43) Veröffentlichungstag der Anmeldung: **14.12.2011**
(21) Anmeldenummer: 10169960.1
(22) Anmeldetag: 19.07.2010
(51) Int. Cl.: B62B 1/00, B62K 27/00

(54) **Transportvorrichtung**

(30) Priorität: 11.06.2010 DE 102010023456
(71) Anmelder: caddie GmbH, 89077 Ulm (DE)
(72) Erfinder: Gutierrez, Christopher, 83128, Halfing (DE); Lazar, Timotheus, 8042, Graz (AT); Feurstein, Doris, 6923, Lauterach (AT)
(74) Vertreter: Becker Kurig Straus

(57) **Zusammenfassung**

Erfindungsgemäß wird eine Transportvorrichtung (1) zur Aufnahme von Lasten vorgeschlagen, die derart konstruiert ist, um sowohl mittels eines per Muskelkraft und/oder motorisch betriebenes Fortbewegungsmittel (2) gezogen zu werden als auch durch eine Person manuell per Muskelkraft verwendet zu werden. Die Transportvorrichtung (1) weist eine Rahmenstruktur (100) mit mindestens einem Laufrad (150) auf, das einem Griff (200) in Längsrichtung der Transportvorrichtung (1) gegenüberliegend an der Rahmenstruktur (100) angeordnet ist. Der Griff (200) ist einschiebbar und ausziehbar ausgeführt, bevorzugt ist der Griff (200) in die Rahmenstruktur der Transportvorrichtung (1) einschiebbar bzw. ausziehbar. Durch Einschieben des Griffs wird mindestens ein Hilfsrad (160) ausgestellt und durch Ausziehen des Griffs (200) das mindestens eine Hilfsrad (160) eingezogen.

## Beschreibung

Die vorliegende Erfindung betrifft eine Transportvorrichtung, deren Konfiguration durch manuellen Eingriff geändert werden kann. Insbesondere eignet sich die manuell konfigurierbare Transportvorrichtung zur Befestigung an ein per Muskelkraft und/oder motorisch betriebenes Fortbewegungsmittel in der Art eines Anhängers und zur manuellen Verwendung bzw. zum Gebrauch mittels Muskelkraft durch eine Person in der Art eines rollenden Transportvehikels wie zum Beispiel ein Einkaufwagen.

Aufgabe der vorliegenden Erfindung ist es, eine Transportvorrichtung zur Aufnahme von Lasten bereitzustellen, die sich sowohl als Anhänger für ein per Muskelkraft und/oder motorisch betriebenes Fortbewegungsmittel einsetzbar ist als auch durch eine Person manuell per Muskelkraft verwendet werden kann.

Erfindungsgemäß wird eine Transportvorrichtung zur Aufnahme von Lasten vorgeschlagen, die derart konstruiert ist, um sowohl mittels eines per Muskelkraft und/oder motorisch betriebenes Fortbewegungsmittel gezogen zu werden als auch durch eine Person manuell per Muskelkraft verwendet zu werden. Die Transportvorrichtung weist eine Rahmenstruktur mit mindestens einem Laufrad auf, das von einem Griff in Längsrichtung der Transportvorrichtung beabstandet an der Rahmenstruktur angeordnet ist. Der Griff ist einschiebbar und ausziehbar ausgeführt. Durch Einschieben des Griffs wird mindestens ein Hilfsrad ausgestellt und durch Ausziehen des Griffs das mindestens eine Hilfsrad eingezogen.

Bevorzugt ist das Laufrad auf einer dem Griff in Längsrichtung der Transportvorrichtung gegenüberliegenden Seite an der Rahmenstruktur angeordnet.

Ferner bevorzugt kann der Griff in die Rahmenstruktur der Transportvorrichtung einschiebbar und ausziehbar ausgeführt sein. Durch Einschieben des Griffs in die Rahmenstruktur der Transportvorrichtung wird mindestens ein Hilfsrad ausgestellt und durch Ausziehen des Griffs aus der Rahmenstruktur das mindestens eine Hilfsrad eingezogen.

Zum Ziehen der Transportvorrichtung mittels des Fortbewegungsmittels, bevorzugt mittels eines Fahrrads, umfasst die Transportvorrichtung mindestens ein hinsichtlich der Querachse der Transportvorrichtung mittig ausgerichtetes Laufrad oder mindestens eine parallel zu Querachse der Transportvorrichtung angeordnete Radachse mit an deren Enden angeordneten Laufrädern.

Der Griff ist sowohl für die manuelle Handhabung als auch als Deichsel, d.h. Lenk- und Steuerrohr vorgesehen. Durch Einschieben des Griffs wird mindestens ein Hilfsrad ausgestellt. Das Ausstellen des Hilfsrads kann eine Klapp oder eine Schwenkbewegung umfassen. So kann die Transportvorrichtung durch eine Person per Muskelkraft manuell gebrauchbares Transportvehikel wie zum Beispiel als Einkaufswagen Einsatz finden. Durch Ausziehen des Griffs wird das mindestens eine Hilfsrad (z.B. in einer Schwenkbewegung) eingezogen. In dieser Konfiguration findet die Transportvorrichtung als Anhänger für ein Zweirad Einsatz. Der Griff bildet die Deichsel, die in ein an dem Zweirad vorgesehenen Gelenk (wie zum Beispiel ein Kugelkopfgelenk, das an der Sattelstütze oder dem Gepäck-/Lastenträger des Zweirads befestigt ist) lösbar verbunden wird. Nun kann die Transportvorrichtung mit dem Zweirad gezogen werden. Die Hilfsräder sind eingezogen, so dass die Transportvorrichtung mit Hilfe des mindestens einen Laufrads rollt.

Gemäß einer Ausführungsform der Erfindung ist das mindestens eine Hilfsrad an der Rahmenstruktur in Längsrichtung der Transportvorrichtung von dem mindestens einen Laufrad beabstandet angeordnet. Bevorzugt ist das mindestens eine Hilfsrad an der Rahmenstruktur in Längsrichtung der Transportvorrichtung in Richtung auf den Griff zu von dem mindestens einen Laufrad beabstandet angeordnet

Gemäß einer Ausführungsform der Erfindung umfasst die Transportvorrichtung mindestens eine Summe von drei Rädern einschließlich des mindestens einen Laufrads und des mindestens einen Hilfsrads, so dass in der Konfiguration mit dem mindesten einen ausgestellten Hilfsrad, die Transportvorrichtung auf einem Untergrund rollend schiebend bewegbar ist.

Gemäß einer Ausführungsform der Erfindung umfasst die Transportvorrichtung zwei Hilfsräder, die in Längsrichtung des Transportvorrichtung gesehen seitlich angeordnet sind und durch das Einschieben des Griffs simultan ausstellbar und durch Ausziehen des Griffs simultan einziehbar sind.

Gemäß einer Ausführungsform der Erfindung ist der Griff eingerichtet, um in ein Koppelgelenkt wie zum Beispiel einem Kugelkopfgelenk lösbar eingehängt zu werden, das an der Sattelstange eines Fahrrads oder einem in Höhe äquivalenten Element eines Zweirads wie zum Beispiel einem Gepäck- oder Lasterträger gebracht ist.

Gemäß einer Ausführungsform der Erfindung ist die Rahmenstruktur derart gestaltet, dass der Griff auf einer Höhe angeordnet ist, die von einer Durchschnittsperson bei rollender Handhabung ohne Bückbewegung bzw. Bückhaltung durch mindestens eine ihrer Hände erreichbar ist.

Gemäß einer Ausführungsform der Erfindung weist die Rahmenstruktur mindestens eine Radachse auf, die an der Rahmenstruktur dem Griff in Längsrichtung gegenüberliegend angeordnet ist, wobei an den Enden der Radachse jeweils ein Laufrad angeordnet ist.

Gemäß einer Ausführungsform der Erfindung sind die Laufräder auf einer gemeinsamen Radachse angeordnet sind oder die Laufräder auf jeweils eigenen Radachsen angeordnet, die im Wesentlichen fluchten und mit der Rahmenstruktur verbunden sind.

Gemäß einer Ausführungsform der Erfindung wird das mindestens eine Hilfsrad in einer Schwenkbewegung eingefahren und ausgestellt. Die Ebene der Schwenkbewegung ist im Wesentlichen in Längsrichtung der Transportvorrichtung ausgerichtet.

Gemäß einer Ausführungsform ist der Griff mit einem Zug verbunden, der in der Rahmenstruktur verläuft und der an seinem anderen Ende mit mindestens einem Schwenkmechanismus verbunden ist. Der Schwenkmechanismus ist eingerichtet, die Einschiebbewegung des Griffs in das Ausstellen des mindestens einen Hilfsrads umzusetzen. Der Schwenkmechanismus ist ferner eingerichtet, die Ausziehbewegung des Griffs in das Einziehen des mindestens einen Hilfsrads umzusetzen.

Gemäß einer Ausführungsform der Erfindung weist der Griff eine im Wesentlichen U-förmige bzw. V-förmige Gestalt auf, Die Schenkelelemente des Griffs sind mindestens teilweise in die Rahmenstruktur der Transportvorrichtung eingeschoben. Mindestens die in die Rahmenstruktur einschiebbaren Bereiche der Schenkelelemente des Griffs koaxial mit mindestens den korrespondierenden Bereichen der Rahmenstruktur angeordnet sind, die die Schenkelelemente aufnehmen.

Gemäß einer Ausführungsform der Erfindung sind die Schenkelelemente des U-förmigen oder V-förmigen Griffs im Querschnitt im Wesentlichen kreisförmig oder ellipsoid.

Mindestens die Bereiche der Rahmenstruktur, in die die Schenkelelemente eingeschoben werden, weisen einen kongruenten Querschnitt auf.

Gemäß einer Ausführungsform der Erfindung weist die Basis des im Wesentlichen U-förmig gestalteten Griffs oder des im Wesentlichen V-förmig, an der Spitz abgeschnitten gestalteten Griffs einen Griffbereich auf, der durch mindestens zwei in dem Griffbereich angeordneten Basiselementen getragen wird. Die Basiselemente können teleskopartig aus dem Griffbereich ausgezogen oder eingeschoben werden. Hierdurch wird ein Teleskopmechanismus zur Variation der Griffbreite realisiert.

Gemäß einer Ausführungsform der Erfindung vergrößert sich der Abstand der Schenkelelemente des U-förmigen oder V-förmigen Griffs in einer Richtung wegweisend vom Griff.

Gemäß einer Ausführungsform der Erfindung ist der Griffbereich für den manuellen Gebrauch bzw. für die manuelle Verwendung der Transportvorrichtung gestaltet.

Gemäß einer Ausführungsform der Erfindung ist der Griffbereich gestaltet, um mittels eines Koppelelement, das an dem Griff vorgesehen ist oder an den Griff lösbar angebracht werden kann, an ein Kugelkopfgelenk gekoppelt zu werden, um die Transportvorrichtung mit einem Zweirad gezogen zu werden.

Gemäß einer Ausführungsform der Erfindung ist die Rahmenstruktur geeignet, um mindestens ein Behältnis zur Aufnahme von Lasten auszunehmen, wobei das Behältnis als Hartschale ausgebildet sein kann oder aus einem flexiblen Material besteht.

Gemäß einer Ausführungsform der Erfindung kann das Behältnis auf der in Richtung des mindestens einen Laufrads angeordneten Seite durch einen Mechanismus angehoben werden, so dass gewährleistet ist, dass im nicht angehobenen Zustand der Schwerpunkt der Transportvorrichtung, wenn mit Lasten in dem Behältnis bestückt möglichst niedrig ist und im angehobenen Zustand die Lasten in dem Behältnis von einer Durchschnittsperon besser erreichbar sind.

Weitere vorteilhafte Merkmale der Erfindung ergeben sich aus den Unteransprüchen und der nachfolgenden detaillierten Beschreibung, die die Erfindung nachfolgend in Verbindung mit erfindungsgemäßen Ausführungsformen der Transportvorrichtung näher erläutert. Die Zeichnungen
- Fig. 1a bis 1d: zeigen schematische Darstellungen der Rahmenstruktur einer Ausführungsform der Transportvorrichtung in Seitenansicht und Aufsicht jeweils mit und ohne Griff;
- Fig. 2a bis 2d: zeigen schematische Darstellungen der Rahmenstruktur mit Laufräder und Hilfsräder einer Ausführungsform der Transportvorrichtung in Aufsicht, Seitenansicht, Rückansicht und perspektivischer Ansicht;

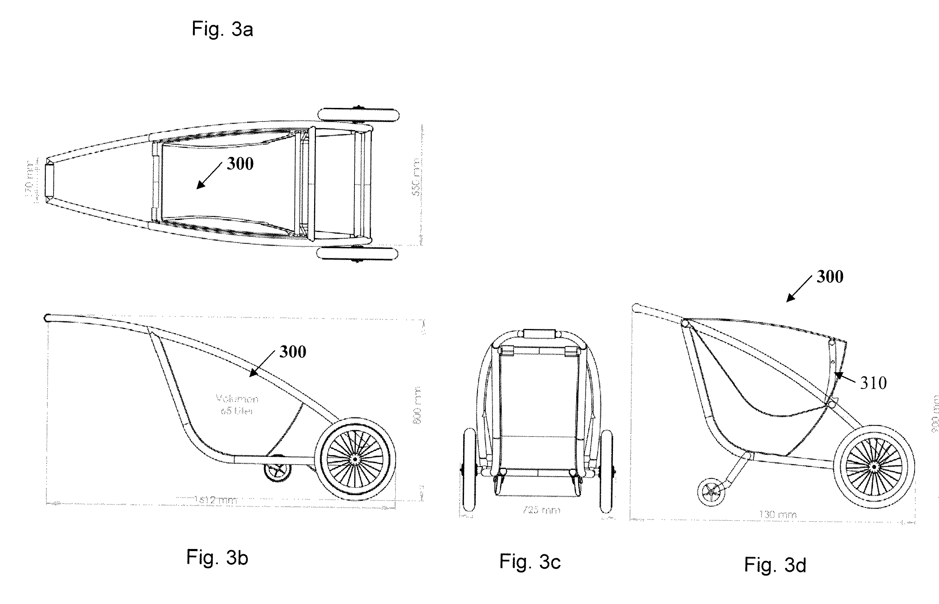

- Fig. 3a bis 3d: zeigen schematische Darstellungen der Rahmenstruktur mit sowohl Laufräder und Hilfsräder als auch Transportbehältnis einer Ausführungsform der Transportvorrichtung in Aufsicht, Seitenansicht und Rückansicht in der Konfiguration als Anhänger und in der Konfiguration als Einkaufswagen;
- Fig. 4a: zeigt eine schematische Darstellung einer Ausführungsform des Griffs mit Teleskopauszug zur Variierbarkeit der Breite des Griffs;
- Fig. 4b: zeigt eine schematische Darstellung der Einschwenkbewegung der Hilfsräder durch Auszug des Griffs aus der Rahmenstruktur einer Ausführungsform der Transportvorrichtung;
- Fig. 4c und 4d: zeigen schematische Darstellungen von Ausführungsformen der Transportvorrichtung mit Transportverhältnis und Anhebemechanismus, mit Hilfe dessen das Transportbehältnis zumindest einseitig angehoben werden kann, so dass eine Person in dem Transportbehältnis befindliche Lasten einfacher handhaben kann;
- Fig. 5: zeigt schematische Darstellungen der Krümmungen von Teilen des Trägerrahmens einer Ausführungsform der Transportvorrichtung;

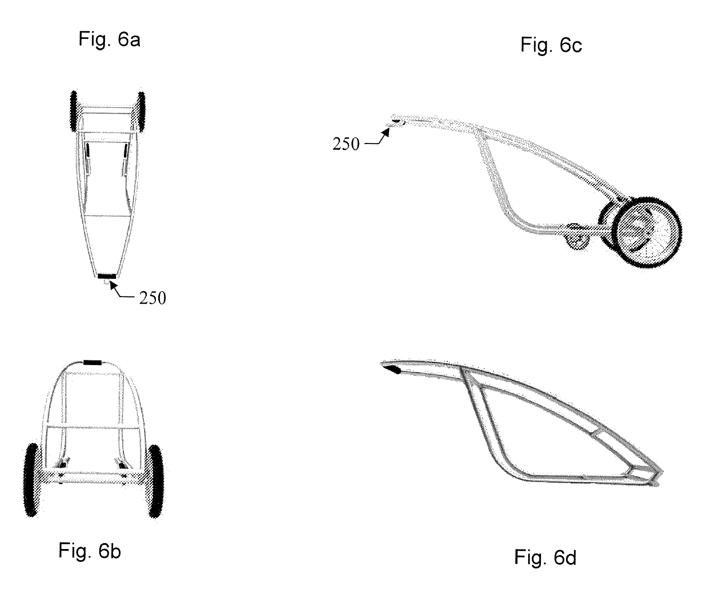

- Fig. 6a bis 6d: zeigen Darstellungen der Rahmenstruktur mit und ohne Laufräder und Hilfsräder einer Ausführungsform der Transportvorrichtung in Aufsicht, Seitenansicht, und Rückansicht;
- Fig. 7: zeigt eine schematische Darstellung einer Ausführungsform der Transportvorrichtung, die als ein Anhänger an ein Fahrrad gekoppelt ist, das ein entsprechendes Kupplungselement aufweist;

In den Zeichnungen bezeichnen gleiche Bezugszeichen gleiche oder ähnliche Elemente der erfindungsgemäßen Transportvorrichtung. Es soll verstanden werden, dass die in den Zeichnungen gezeigten Ausführungsformen lediglich beispielhaft sind. Einzelne Ein oder mehrere Elemente einer Ausführungsform der Transportvorrichtung können mit den weiteren gezeigten und/oder beschriebenen Ausführungsformen kombiniert werden.

### Struktur des Trägerrahmens der Transportvorrichtung

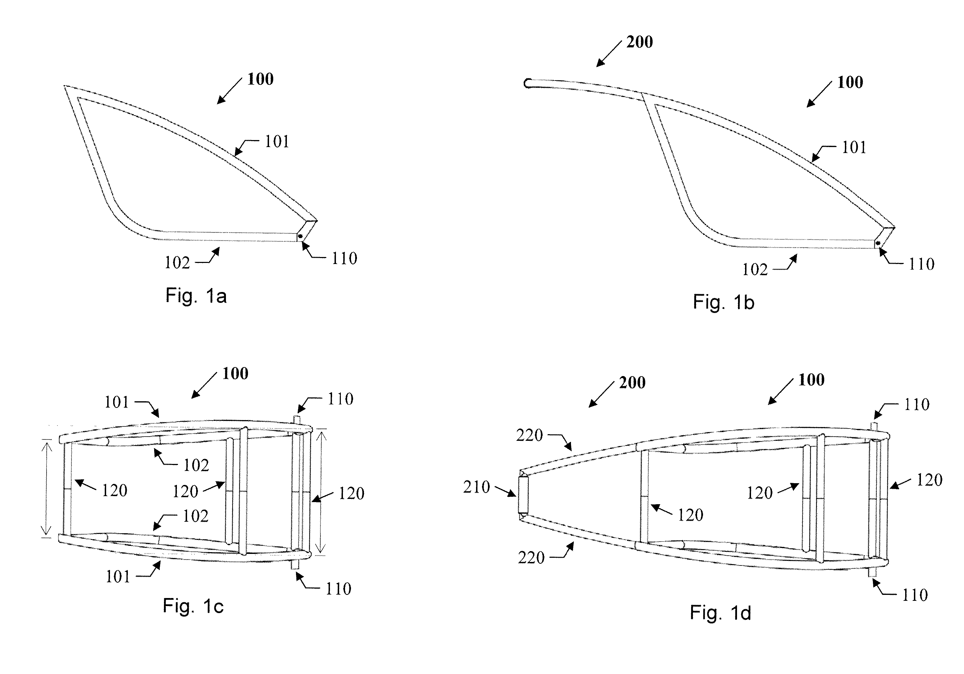

Wie in Figur 1a schematisch dargestellt, weist die Struktur des Trägerrahmens 100 in der Seitenansicht parallel zur Längsrichtung eines Ausführungsform der Transportvorrichtung 1 eine im Wesentlichen Dreieck-förmige Gestaltung auf. Die lange Dreiecksseite 101 der im Wesentlichen Dreieck-förmige Gestaltung verläuft ansteigend von der Seite aus, an der in Querrichtung eine Achse 110 vorgesehen ist, an deren Enden zwei seitlich ausgestellte Laufräder 150 angeordnet sind, auf die Seite zu, an der ein einschiebbar bzw. ausziehbarer Griff 200 vorgesehen ist. In den Figuren 1a bis 1d ist die Achse 110 der Laufräder 150 auf der rechten Bildseite schematisch angedeutet. Eine der kürzeren Dreiecksseiten 102 ist vorgesehen, um bei Verwendung der Transportvorrichtung im Wesentlichen parallel zu Untergrund ausgerichtet zu sein. Die der langen Dreiecksseite 101 entsprechenden Struktur des Trägerrahmens kann bevorzugt konvex verlaufend gestaltet sein.

Die Achse 110 bzw. Achsen 110 repräsentieren zugleich die Drehachse(n) der Laufräder 150. Die Drehachse(n) der Laufräder 150 ist raumstabil, d.h. die Drehebenen der Laufräder 150 sind im Wesentlichen parallel zu der Längsrichtung der Transportvorrichtung 1.

Wie in Figur 1b schematisch dargestellt, ist auf der Seite, die der Seite gegenüberliegt, an der die Achse 110 zur Aufnahme der Laufräder 150 angeordnet ist, ein Griff 200 vorgesehen. Einerseits dient der Griff 200 bei manueller Verwendung bzw. bei Gebrauch mittels Muskelkraft der Transportvorrichtung 1 als Handgriff, mit Hilfe dessen eine Person die Transportvorrichtung manuell führt, d.h. bevorzugt schiebt. Andererseits ist der Griff 200 vorgesehen, um mit einem Fortbewegungsmittel verbunden zu werden. Bei dieser Art der Verwendung dient der Griff 200 als Lenk- und Steuerrohr bzw. Deichsel, wenn die Transportvorrichtung durch das Fortbewegungsmittel in der Art als Anhänger bevorzugt gezogen wird.

Figur 1c zeigt eine schematische Darstellung der Aufsicht auf die Struktur des Trägerrahmens 100 einer Ausführungsform der Transportvorrichtung 1. Die Struktur des Trägerrahmens kann in der Aufsicht als im Wesentlichen rechteckig bezeichnet werden. längsseitig angeordnete Teile 101 der Struktur des Trägerrahmens 100 können bevorzugt konvex verlaufen. Die Weite der Struktur des Trägerrahmens in der Aufsicht ist an dessen Ende, an dem der Griff vorgesehen ist, bevorzugt geringer als an dem Ende, an dem die Achse 110 für die Laufräder 150 vorgesehen ist.

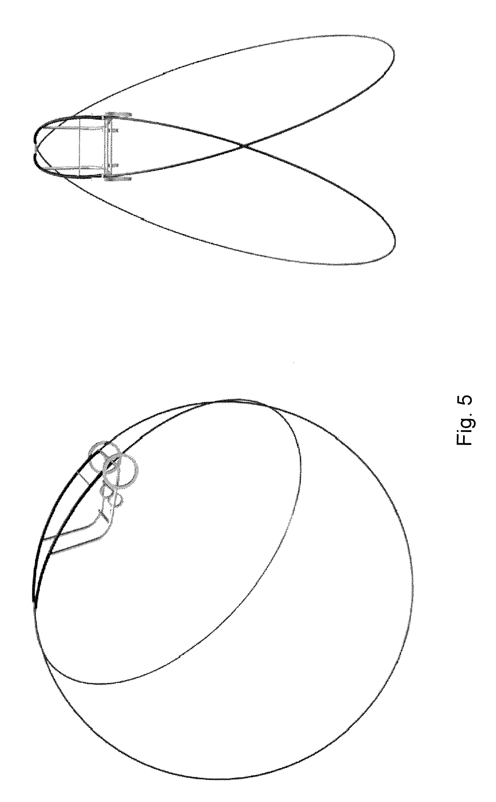

Die beispielhaft beschriebenen Krümmungen von Teilen des Trägerrahmens sind ergänzend in Figur 5 schematisch dargestellt. Im Rahmen der in Figur 5 gezeigten Ausführungsform wird vorgeschlagen, lediglich einfache Kreisradien im 2-dimensionalen Raum vorzusehen. Hierdurch werden komplexe Biegungen vermieden, so dass eine kostengünstige Produktion der Transportvorrichtung gewährleistet ist. In der gezeigten Ausführungsform folgt die Biegung zwei verschränkten Kreisen im 2-dimensionalen Raum.

Mehrere Querverbindungen 120 verbinden die in Seitenansicht Dreieck-förmigen Strukturen des Trägerrahmens. In der gezeigten beispielhaften Ausführungsform sind fünf Querverbindungen 120 vorgesehen. Es soll jedoch verstanden werden, dass die Zahl der Querverbindungen 120 in Abhängigkeit von der erforderlichen Stabilität der Transportvorrichtung und/oder des für den Trägerrahmen verwendeten Materials variieren kann. Ferner können Querverbindungen 120 vorgesehen werden, die die Aufnahme von bestimmten Lasten erlauben.

Der Trägerrahmen 100 ist bevorzugt aus einem oder mehreren Rohren gefertigt. Bei Verwendung von Rohren können kreisförmige und/der elliptische Querschnitte vorgesehen werden. Alternativ sind ebenso Hohlelemente mit anderen Querschnitten, wie zum Beispiel rechteckförmig, quaderförmig, quadratisch und dergleichen auch in Kombination mit Rohren möglich. Elliptische Querschnitte eignen sich insbesondere für lasttragende Elemente, auf die eine gerichtete Kraft wirkt. Als Rohrmaterial eignen sich zum Beispiel Aluminium bzw. Legierungen von Aluminium. Es können zum Beispiel Aluminium-Legierungen verwendet werden, die aus dem Fahrradbau bekannt sind und die erforderlichen Materialeigenschaften aufweisen. Ebenso könnten andere Materialien zum Einsatz kommen, die aus dem Fahrradbau bekannt sind, wie zum Beispiel Stahl und dessen Legierungen oder Kohlefaserlaminat-Composites, um nur einige Beispiele zu nennen. Die einzelnen Elemente des Trägerrahmens 100 werden bevorzugt mittels Schweißen miteinander verbunden.

Alternativ und/oder ergänzend können auch gemuffte, geschraubte und/der genietete Verbindungen vorgesehen werden.

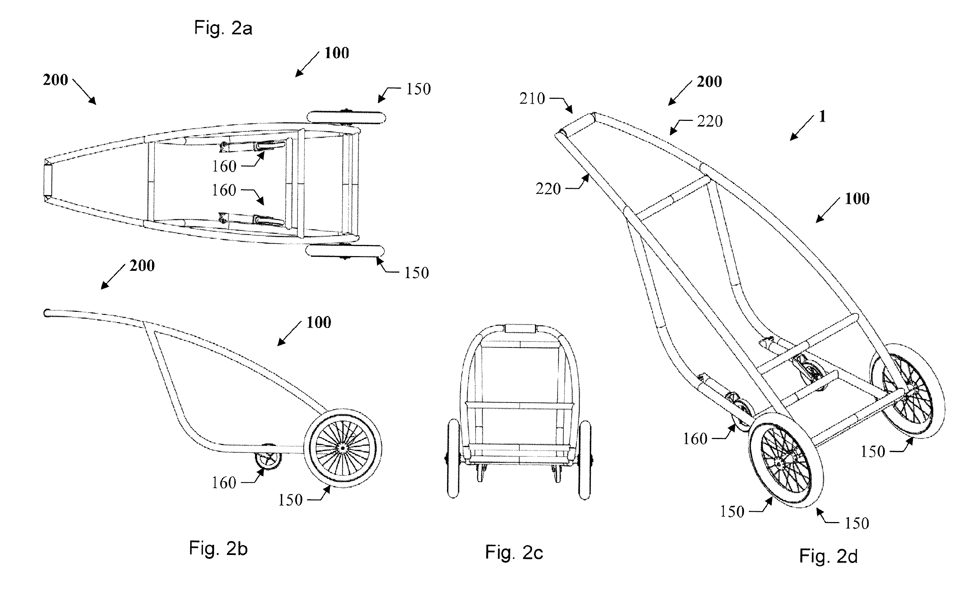

Anstatt zweier Laufräder 150, wie zum Beispiel in der in Figuren 2 gezeigten Ausführungsform der Transportvorrichtung kann alternativ ein einzelnes Laufrad 150 vorgesehen sein, das bevorzugt mittig bezüglich der Querrichtung der Transportvorrichtung 1 angeordnet ist. Selbige Alternative ist auch für die Hilfsräder 160 denkbar. So kann anstatt der gezeigten und beschriebenen zwei Hilfsräder 160 lediglich ein Hilfsrad 160 vorgesehen sein, das ebenso bevorzugt mittig bezüglich der Querrichtung der Transportvorrichtung 1 angeordnet ist. In diesem Zusammenhang wäre zu berücksichtigen, dass drei Räder (Summe aus Laufräder 150 und Hilfsräder 160) ausreichend sind, dass die Transportvorrichtung 1 selbständig stabil auf einem Untergrund steht und auf diesem durch eine Person manuell, rollend geführt bzw. vorzugsweise geschoben werden kann.

Die Drehebenen der Hilfsräder 160 sind, wenn ausgestellt, im Gegensatz zu den Drehebenen der Laufräder 150 nicht raumfest. Das heißt, dass die Drehebenen der Hilfsräder 160 im Raum geschwenkt werden kann, zum Beispiel frei um 360° und mehr oder um einen vorgegebenen Winkelbereich. Die Drehebenen der Hilfsräder 160 können somit Raumorientierungen einnehmen, in denen diese Drehebenen nicht parallel zu der Längsrichtung der Transportvorrichtung 1 orientiert sind. Das Schwenken der Drehebenen der Hilfsräder 160 gewährleistet, dass die Transportvorrichtung 1, wenn diese beispielsweise mit ausgestellten Hilfsrädern 160 als Einkaufwagen Einsatz findet, Kurvenfahren durchführt werden können. Bevorzugt sind die Drehebenen der Hilfsräder 160 unabhängig voneinander schwenkbar.

In eingezogener Position können die Drehebenen der Hilfsräder 160 eine bevorzugte Orientierung einnehmen, die zum Beispiel durch die konstruktiven Randbedingungen des Rahmens 200 der Transportvorrichtung 1 vorgegeben ist. Vorteilhafterweise können die Drehebenen der Hilfsräder 160 in eingezogener Position derart vorgegeben sein, dass deren Schwenken im Raum unterbunden ist, so dass beispielsweise ein "Klappern" der Hilfsräder 160 verhindert wird.

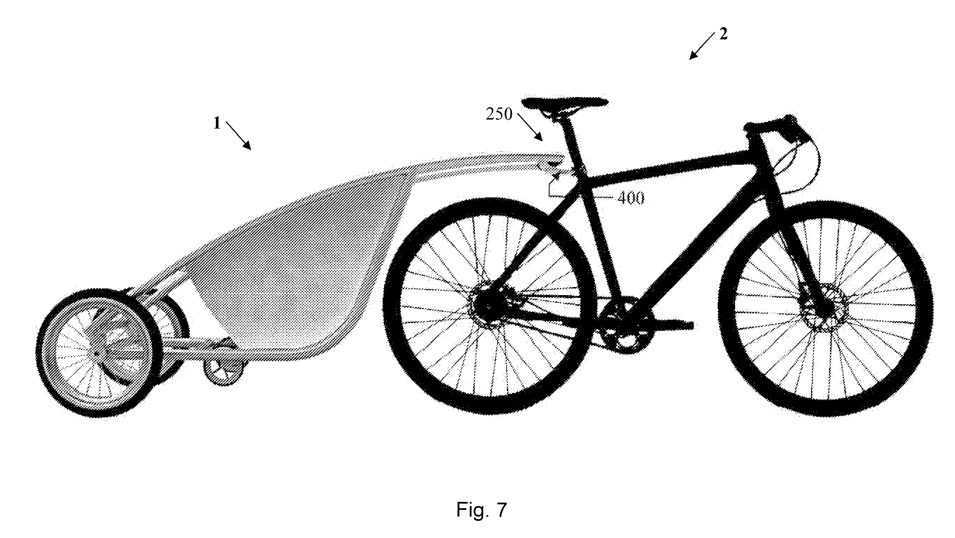

Wie zum Beispiel in Figur 1d gezeigt, weist der Griff 200 einer Ausführungsform der Transportvorrichtung 1 in der Aufsicht eine Gestaltung auf, die als im Wesentlichen U-förmig bzw. V-förmig mit abgeschnittener Spitze bezeichnet werden kann. An der Basis des U-förmig bzw. V-förmig gestalteten Griffs 200 ist ein Griffbereich 210 vorgesehen. Der Griffbereich 210 dient bei manueller Verwendung bzw. bei Gebrauch der Transportvorrichtung 1 mittels Muskelkraft als Handgriff, mit Hilfe dessen eine Person die Transportvorrichtung manuell führt. Bei Verwendung bzw. bei Gebrauch der Transportvorrichtung 1 als Transportanhänger, wie beispielsweise in Figur 7 gezeigt, wird bevorzugt im Griffbereich 210 beispielsweise ein den Griffbereich zumindest teilweise umfassendes Koppelelement 250 lösbar vorgesehen. Das Koppelelement 250 ist eingerichtet, mit einem Kupplungselement 400 lösbar gekoppelt zu werden, das an dem Fortbewegungsmittel 1 bevorzugt dauerhaft befestigt vorgesehen, an das die Transportvorrichtung angehängt wird. Das Koppelelement 250 kann alternativ dauerhaft an dem Griff 200 vorgesehen sein oder durch eine an dem Griff 200 vorgesehenen Aufnahmeelement (nicht gezeigt) lösbar verbunden werden.

Das Kupplungselement 400 kann zum Beispiel an einer Sattelstange (wie beispielhaft in Figur 7 gezeigt) oder auf einem Gepäck- oder Lastenträger des Fortbewegungsmittels 2 befestigt sein. Alternativ kann das Kupplungselement 400 ebenso an einer Struktur des Fortbewegungsmittels 2 befestigt sein, die im Wesentlichen in Höhe äquivalent zu der einer Sattelstange bzw. eines Gepäck- oder Lastenträgers ist. Bevorzugt ist das Kupplungselement 400 als Kugelkopf-Kupplungselement ausgeführt.

Die Ausführungsformen der Transportvorrichtung 1 gemäß der vorliegenden Erfindung sind ausgelegt, um an ein per Muskelkraft und/oder motorisch betriebenes Fortbewegungsmittel in der Art eines Anhängers angehängt zu werden und um bei manueller Verwendung bzw. bei manuellem Gebrauch durch Muskelkraft einer Person in der Art eines rollenden Transportvehikels eingesetzt zu werden wie zum Beispiel ein Einkaufwagen.

Bei Verwendung der Transportvorrichtung 1 in Form eines Anhängers kommen als Zugmittel per Muskelkraft und/oder motorisch betriebenes Fortbewegungsmittel in Betracht. Die hierbei angedachten Fortbewegungsmittel umfassen Zweiräder wie zum Beispiel Fährräder, Fährräder mit Motorunterstützung, Mopeds, und Mofas. Ferner ist die Transportvorrichtung 1 ausgelegt, um durch dreirädrige oder vierrädrige Fortbewegungsmittel gezogen zu werden, wie zum Beispiel per Muskelkraft und/oder motorisch fortbewegte werden einschließlich dreirädrige und vierrädrige Fahrräder, Trikes und Quads bzw. ATVs (All Terrain Vehicles).

Insbesondere ist die Transportvorrichtung 1 gemäß der vorliegenden Erfindung für drei- oder mehrrädrige Kraftfahrzeuge mit einer bauartbedingten Höchstgeschwindigkeit im Bereich von ungefähr 25 km/h vorgesehen.

### Funktionsweise der Transportvorrichtung

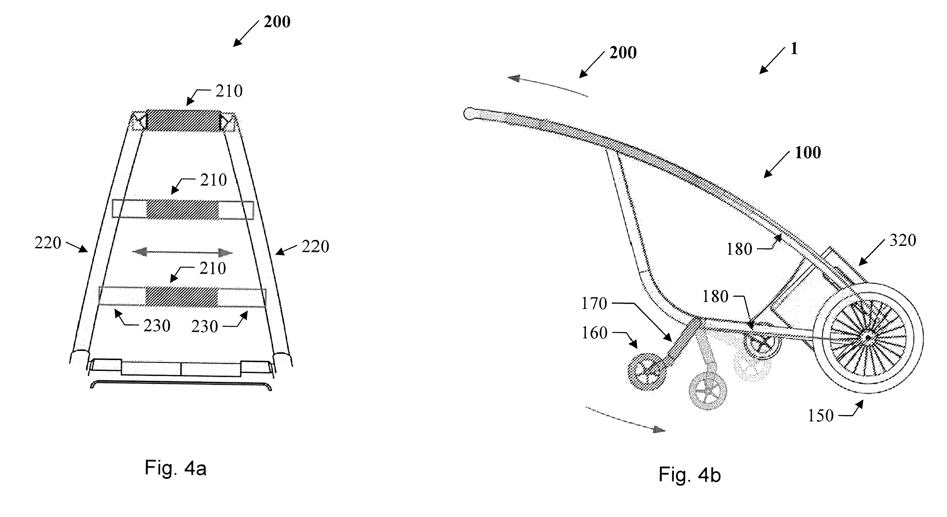

Wie in Fig. 4b schematisch dargestellt ist der Griff 200 mit einem Zug 180, einem Gestänge (nicht gezeigt) oder einem anderen wirkungsgleichen Element verbunden, das bevorzugt aber nicht notwendigerweise innerhalb der Rahmenstruktur 100 der Transportvorrichtung verläuft. Der Zug ist an dem anderen Ende mit einem Schwenkmechanismus verbunden. Der Schwenkmechanismus setzt den durch den Zug 180, das Gestänge (nicht gezeigt) oder das alternative wirkungsgleiche Element übertragene durch eine Einschiebbewegung bzw. Ausziehbewegung, die bevorzugt durch Muskelkraft einer Person bewirkt wird, in eine Schwenkbewegung der Hilfsräder bzw. der Auslegerelemente 170, an den jeweils ein Hilfsrad vorgesehen ist, umgesetzt. Die Schwenkbewegung findet bevorzugt in einer Ebene statt, die parallel zur Längsrichtung der Transportvorrichtung 1 ausgerichtet ist.

Bei Betätigung des Griffs 200, d.h. beim Einschieben oder Ausziehen, werden die Hilfsräder 160 bevorzugt simultan in Richtung auf die ausgestellt Position oder die eingezogene Position geschwenkt. Beispielsweise kann eine der Positionen als monostabile Grundposition gewählt werden, in der die Hilfsräder 160 in dieser Position durch eine Feder oder ein gleichwirkendes Element gehalten wird. Die Hilfsräder 160 werden In die andere Position gebracht, indem durch Einschieben oder Ausziehen des Griffs 200 gegen die Kraft des Federelements gearbeitet wird. Ebenso ist eine bistabile Ausführung denkbar, in der die Hilfsräder 160 in beiden Endpositionen durch ein oder mehrere Federelemente gehalten werden. In die jeweilig andere Position werden die Hilfsräder 160 gebracht, indem jeweils bei Einschieben und Ausziehen des Griffs 200 gegen die Kraft der Federelemente gearbeitet wird.

Entsprechend der in der Aufsicht sich in Richtung auf den Griff 200 konkaven und letztendlich verjüngenden Struktur des Trägerrahmens 100 der Transportvorrichtung 1, ist, um ein Einschieben und Ausziehen des Griffs 200 zu ermöglichen, der Griff 200 mit veränderbarer Breite auszuführen. Wie in Fig. 4a gezeigt, ist dies zum Beispiel mit Hilfe eines Teleskopauszugmechanismus möglich. Der Griff 200 ist hierbei beispielsweise aus drei Elementen aufgebaut, dem Griffelement 210, und den Schenkeln 220, die mit Eingreifelementen 230 versehen sind, die in das Griffelement 210 einschiebbar und aus dem Griffelement 210 ausziehbar sind. Hierdurch kann der Abstand der Griffschenkel 220 variiert werden.

Die Breitenvariation des Griffs durch den vorstehend beschriebenen oder einen alternativen Teleskopauszugmechanismus hat den Vorteil, dass im ausgezogenen Zustand des Griffs 200 die Griffbreite im Bereich des Griffbereichs 210 das konstruktionsbedingte Minimum erreicht. Dieses ist derart ausgelegt, dass, wenn die Transportvorrichtung zum Beispiel als Anhänger für ein Fahrrad 2 zum Einsatz kommt und an ein an der Sattelstange befestigtes Kugelkopfkupplungslager 250 gekoppelt wird, keine Behinderung des Radfahrers durch den eingekuppelten Griff 200 bei Kurvenfahrten zu befürchten ist. Eine zu große Griffbreite könnte dazu führen, dass der Griff 200 bei Kurvenfahrten in Kontakt mit den Beinen des Radfahrers kommt.

Die Breitenvariation des Griffs durch den vorstehend beschriebenen oder einen alternativen Teleskopauszugmechanismus hat weiterhin den Vorteil, dass im eingeschobenen Zustand des Griffs 200 die Griffbreite im Bereich des Griffbereichs 210 das konstruktionsbedingte Maximum erreicht. Das Angreifen einer oder zweier Hände durch einen Benutzer bei manueller Verwendung der Transportvorrichtung zum Beispiel als Einkaufswagen ist hierdurch erheblich begünstigt.

Weiterhin kann eine Arretierung der Position des Griffs 200 vorgesehen werden. Hier kann Klemmelement (nicht gezeigt) verwendet werden, Ein derartiges Klemmelement ist zum Beispiel ein als Sattelstützenklemme aus dem Bereich der Fahrradtechnik bekannt. Mit Hilfe zum Beispiel Hebels, einer Schraube oder dergleichen kann ein derartiges rohrumfassendes Klemmelement (nicht gezeigt) in seinem Innenumfang variiert werden. Somit eignet sich ein derartig ausgeführtes Klemmelement zur Arretierung ineinandergeschobene Elemente, wie dies für die in den Trägerrahmen eigeschobenen Griffschenkel der Fall ist.

### Ausstattung der Transportvorrichtung

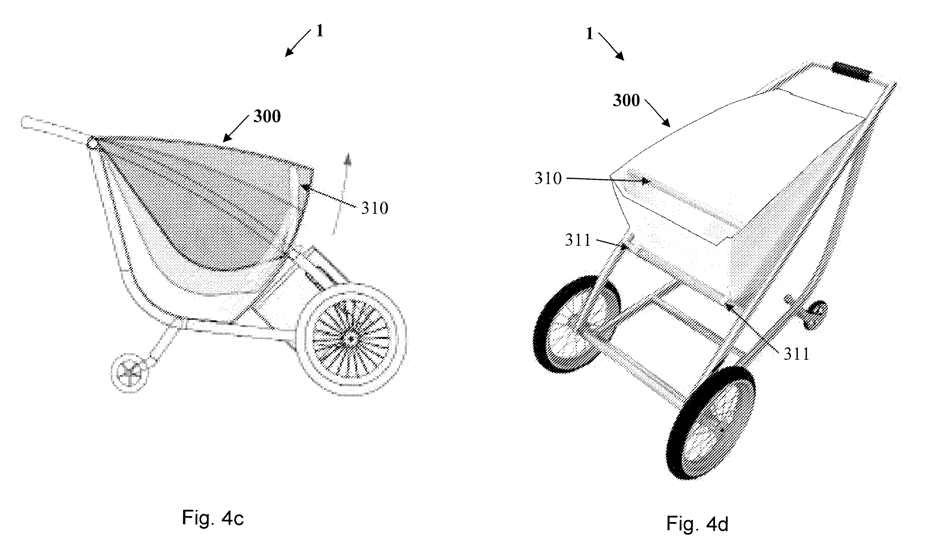

Wie beispielsweise in Figuren 4c und 4d schematisch dargestellt, kann Trägerrahmen 100 einer Ausführungsform der Transportvorrichtung 1 ist zur Aufnahme von mindestens einem Behältnis 300 ausgebildet sein. Das Behältnis 300 dient Beispielsweise zur Aufnahme von Lasten. Das Behältnis 300 kann hierzu in der Form eines Hartschalenbehältnisses ausgebildet sein und/oder aus einem flexiblen Material besteht. Bevorzugt ist das Behältnis 300 aus Kunststoffen zu fertigen, um ein günstiges Gewichts-Stabilitätsverhältnis bei wirtschaftlich vernünftigen Kosten zu gewährleisten. Als flexibles Material können insbesondere Kunstfasergewebe zum Einsatz kommen, wie sie zum Beispiel aus dem Gebiet der Satteltaschen, Packtaschen und Rucksäcke bekannt sind.

Das Behältnis 300 kann mit einer Abdeckung (nicht gezeigt) in Form eines Deckels oder eines Überzugs versehen sein, damit die in dem Behältnis transportierten Gegenstände zum Beispiel gegenüber wetterbedingten Einflüssen geschützt sind. Der Deckel bzw. Überzug kann wiederum als steifes Element ausgebildet oder aus flexiblen Materialen gebildet sein. In dem ersten Fall kann der Deckel weiterhin mit einer Scharnierfunktion und/oder Schnellverschlüssen versehen sein. Schnellverschlüssen als Halteelemente können ebenso bei Überzügen Verwendung finden.

Das Behältnis 300 und/oder der Trägerrahmen 100 einer Ausführungsform der Transportvorrichtung 1 können weiterhin mit einem Anhebemechanismus 310 versehen sein, der es ermöglicht, das Behältnis zumindest an einer seinen Seiten anzuheben. In Fig. 4c ist eine beispielhafte Ausführungsform eines hierzu geeigneten Anhebemechanismus 310 gezeigt. Das Behältnis 300 wird beispielsweise durch eine Person in einer Schwenkbewegung manuell angehoben. In dem illustrierten Beispiel wird das Behältnis auf der in Richtung des mindestens einen Laufrads angeordneten Seite angehoben. Auf der in Richtung auf den Griff 200 angeordneten Seite des Behältnisses 300 kann beispielsweise derart in ein Querelement 120 des Trägerrahmens eingehängt sein, dass das Behältnis um dieses Querelement 120 geschwenkt werden kann. Lösbare Haltenasen 311 des Anhebemechanismus 310 wirken mit zumindest einem Element des Trägerrahmens zusammen, um das Behältnis 300 in angehobener Position zu bewahren. Durch den Anhebemechanismus 310 ist gewährleistet, dass im nicht angehobenen Zustand der Schwerpunkt der Transportvorrichtung, wenn mit Lasten in dem Behältnis bestückt, möglichst niedrig ist und im angehobenen Zustand die Lasten in dem Behältnis von einer Durchschnittsperon besser erreichbar sind.

Das Behältnis kann entweder fest mit dem Trägerrahmen 100 verbunden vorgesehen oder abnehmbar gestaltet sein. Im letzteren Fall kann der Benutzer einer Ausführungsform der Transportvorrichtung ein für den anzustehenden Transport geeignetes Behältnis wählen.

Ergänzend können flexible, elastisch Haltebänder oder Haltenetze zur Transportsicherung zum Einsatz kommen. Die Haltebänder und/oder Haltenetze können an dem Trägerrahmen 100 vorbefestigt vorgesehen sein.

Weiterhin kann der Trägerrahmen 100 einer Ausführungsform der Transportvorrichtung 1 derart gestaltet sein, dass die Aufnahme von Abmessungs-standardisierten Lasten durch Elemente der Rahmenstruktur 100 der Transportvorrichtung 1 ermöglicht wird. In Figur 4d ist dies beispielhaft unter Bezugnahme auf einen Getränkekasten 320 demonstrativ illustriert.

Zudem kann in einer Ausführungsform der Transportvorrichtung 1 eine Roll- bzw. Standarretierung (nicht gezeigt) vorgesehen sein. Die Roll- bzw. Standarretierung kann beispielsweise bremsend auf mindestens eines der Räder einwirken, so dass gewährleistet wird, dass die Transportvorrichtung 1 durch den Benutzer lösbar gegen eigenständiges ein Wegrollen gesichert werden kann.

Die Erfindung ist nicht auf die beschriebenen Ausführungsbeispiele beschränkt, die auf verschiedene Weise abgewandelt werden können. Dies gilt zum Beispiel für den Griff 200, der in den vorstehend beschriebenen Ausführungsformen in die Rahmenstruktur eingeschoben bzw. aus der Rahmenstruktur ausgezogen werden kann. Eine Wirkungsäquivalente Ausführung sieht einen Griff vor, der mit einem Teleskopmechanismus zur Längenvariation des Griffs 200 ausgeführt ist. Wie vorbeschrieben, wird auch in diesem Ausführungsbeispiel durch Längenvariation des Griffs 200 das Einziehen bzw. Ausstellen des mindestens einen Hilfsrads 160 bewirkt. Ebenso ist die in Aufsicht als im Wesentlichen Rechteck-förmig beschriebene Rahmenstruktur 100 nicht auf diese konkrete Gestaltung der Rahmenstruktur 100 beschränkt anzusehen. Das gleiche trifft auf die in Seitenansicht als im Wesentlichen Dreieck-förmig beschriebene Rahmenstruktur 100. Je nach Anwendungszweck können alternative Gestaltungen der Rahmenstruktur 100 vorgesehen werden.

Weiterhin ist die Erfindung auch nicht auf den zur Variation der Griffbreite beschriebene Mechanismus als beschränkt anzusehen. So kann ein alternativer Teleskopmechanismus zur Breitenvariation vorgesehen werden.

So wird ebenfalls in den vorstehenden Ausführungsformen der Transportvorrichtung die Anordnung des mindestens einen Laufrads 150 an der dem Griff in Längsrichtung gegenüberliegenden Seite der Transportvorrichtung 1 beschrieben. Alternativ kann das mindestens eine Laufrad 150 auch in Richtung auf den Scherpunkt hin verschoben angeordnet sein und das mindestens eine Hilfsrad 160 zum Beispiel in Längsrichtung zu dem mindestens eine Laufrad 150 weg vom Griff 200 beabstandet angeordnet sein.

Ferner können anstelle des mindestens einen Laufrads 150 bzw. des mindestens einen Hilfsrads 150 Zwillingsräder oder dergleichen vorgesehen sein.

Schließlich versteht sich, dass die verschiedenen Merkmale auch in anderen als den beschriebenen und dargestellten Kombinationen verwendet werden können.

## Patentansprüche

1. Eine Transportvorrichtung (1) zur Aufnahme von Lasten, wobei die Transportvorrichtung (1) eingerichtet ist, um sowohl mittels eines per Muskelkraft und/oder motorisch betriebenes Fortbewegungsmittel (2) gezogen zu werden als auch durch eine Person manuell per Muskelkraft verwendet zu werden,
wobei die Transportvorrichtung (1) eine Rahmenstruktur (100) mit mindestens einem Laufrad (150) aufweist, das von einem Griff (200) in Längsrichtung der Transportvorrichtung (1) beabstandet an der Rahmenstruktur (100) angeordnet ist, wobei der Griff (200) einschiebbar und ausziehbar ist,
wobei durch Einschieben des Griffs (200) mindestens ein Hilfsrad (160) ausgestellt wird und durch Ausziehen des Griffs (200) das mindestens eine Hilfsrad (160) eingezogen wird.

2. Die Transportvorrichtung gemäß Anspruch 1 oder Anspruch 2, wobei die Transportvorrichtung (1) mindestens eine Summe von drei Rädern (150, 160) einschließlich dem mindestens einen Laufrad (150) und dem mindestens einen Hilfsrad (160) umfasst, so dass in der Konfiguration mit dem mindesten einen ausgestellten Hilfsrad (160), die Transportvorrichtung (1) auf einem Untergrund mittels der Räder (150, 160) rollend durch die Person manuell per Muskelkraft verwendbar ist.

3. Die Transportvorrichtung gemäß einem der vorstehenden Ansprüche, wobei die Transportvorrichtung (1) zwei Hilfsräder (160) umfasst, die in Längsrichtung des Transportvorrichtung (1) gesehen seitlich angeordnet sind und durch das Einschieben des Griffs (200) simultan ausstellbar und durch Ausziehen des Griffs (200) simultan einziehbar sind.

4. Die Transportvorrichtung gemäß einem der vorstehenden Ansprüche, wobei der Griff (200) eingerichtet ist, um in ein Kupplungselement (400) lösbar eingehängt zu werden, das an der Sattelstange des Fortbewegungsmittels (2) oder einem in Höhe äquivalenten Element des Fortbewegungsmittels (2) wie zum Beispiel einem Gepäck- oder Lasterträger gebracht ist.

5. Die Transportvorrichtung gemäß einem der vorstehenden Ansprüche, wobei die Rahmenstruktur (100) derart gestaltet ist, dass der Griff (200) auf einer Höhe angeordnet ist, die von einer Durchschnittsperson bei rollender Verwendung ohne Bückbewegung und/oder -Haltung durch mindestens eine ihrer Hände erreichbar ist.

6. Die Transportvorrichtung gemäß einem der vorstehenden Ansprüche, wobei die Rahmenstruktur (100) mindestens eine Radachse (110) aufweist, die dem Griff (200) in Längsrichtung gegenüberliegend an der Rahmenstruktur (100) angeordnet ist, wobei an den Enden der Radachse (110) jeweils ein Laufrad angeordnet ist.

7. Die Transportvorrichtung gemäß Anspruch 7, wobei die Laufräder (150) auf einer gemeinsamen Radachse (110) angeordnet sind oder die Laufräder (150) auf jeweils eigenen Radachsen (110) angeordnet sind, die im Wesentlichen fluchten und mit der Rahmenstruktur (100) verbunden sind.

8. Die Transportvorrichtung gemäß einem der vorstehenden Ansprüche, wobei das mindestens eine Hilfsrad (160) in einer Schwenkbewegung eingefahren und ausgestellt wird, wobei die Ebene der Schwenkbewegung im Wesentlichen in Längsrichtung der Transportvorrichtung (1) ausgerichtet ist.

9. Die Transportvorrichtung gemäß einem der vorstehenden Ansprüche, wobei der Griff (200) mit einem Zug (180) verbunden ist, der an seinem anderen Ende mit mindestens einem Schwenkmechanismus verbunden ist,
wobei der Schwenkmechanismus eingerichtet ist, die Einschiebbewegung des Griffs (200) in das Ausstellen des mindestens einen Hilfsrads (160) umzusetzen,
wobei der Schwenkmechanismus ferner eingerichtet ist, die Ausziehbewegung des Griffs (200) in das Einziehen des mindestens einen Hilfsrads (160) umzusetzen.

10. Die Transportvorrichtung gemäß einem der vorstehenden Ansprüche, wobei der Griff (200) eine im Wesentlichen U-förmige bzw. V-förmige Gestalt aufweist, wobei die Schenkelelemente (220) des Griffs mindestens teilweise in die Rahmenstruktur (100) der Transportvorrichtung eingeschoben sind, wobei mindestens die in die Rahmenstruktur (100) einschiebbaren Bereiche der Schenkelelemente (220) des Griffs (200) koaxial zu mindestens den korrespondierenden Bereichen der Rahmenstruktur (100) angeordnet sind, die die Schenkelelemente (220) aufnehmen.

11. Die Transportvorrichtung gemäß Anspruch 10, wobei die Schenkelelemente (220) des U-förmigen oder V-förmigen Griffs (200) im Querschnitt im Wesentlichen kreisförmig oder ellipsoid sind und mindestens die Bereiche der Rahmenstruktur (100), in die Teilbereiche der Schenkelelemente (220) eingeschoben werden einen kongruenten Innenquerschnitt aufweisen.

12. Die Transportvorrichtung gemäß Anspruch 10 oder 11, wobei die Basis des im Wesentlichen U-förmig gestalteten Griffs (200) oder des im Wesentlichen V-förmig, an der Spitz abgeschnitten gestalteten Griffs (200) einen Griffbereich (210) aufweist, wobei der Griff (200) mit einem Teleskopmechanismus zur Variation der Griffbreite versehen ist, so dass beim Einschieben und Ausziehen des Griffs (200) der Abstand der Griffschenkel (220) zueinander variiert werden kann.

13. Die Transportvorrichtung gemäß einem der vorstehenden Ansprüche, wobei der Griffbereich (210) gestaltet ist, um mittels eines Koppelelements (250), das an dem Griff (200) vorgesehen ist oder an den Griff (200) lösbar angebracht werden kann, an ein Kupplungselement (400) gekoppelt zu werden, das von dem Fortbewegungsmittel (2) bereitgestellt wird, um die Transportvorrichtung mit dem Fortbewegungsmittel (2) gezogen zu werden.

14. Die Transportvorrichtung gemäß einem der vorstehenden Ansprüche, wobei die Rahmenstruktur (100) geeignet ist, um mindestens ein Behältnis (2300) zur Aufnahme von Lasten auszunehmen, wobei das Behältnis (300) als Hartschale ausgebildet sein kann oder aus einem flexiblen Material besteht.

15. Die Transportvorrichtung gemäß Anspruch 14, wobei das Behältnis (300) auf der in Richtung des mindestens einen Laufrads angeordneten Seite durch einen Mechanismus (310) angehoben werden kann, so dass gewährleistet ist, dass im nicht angehobenen Zustand der Schwerpunkt der Transportvorrichtung (1), wenn mit Lasten in dem Behältnis bestückt, möglichst niedrig ist und im angehobenen Zustand die Lasten in dem Behältnis (300) von einer Durchschnittsperon besser erreichbar sind.
